(19) Europäisches Patentamt
European Patent Office
Office européen des brevets

(11) **EP 2 034 445 B1**

(12) **EUROPEAN PATENT SPECIFICATION**

(45) Date of publication and mention
of the grant of the patent:
**20.01.2010 Bulletin 2010/03**

(51) Int Cl.:
***G06T 15/40*** *(2006.01)*     ***G06T 15/20*** *(2006.01)*
***G06T 3/00*** *(2006.01)*

(21) Application number: **08163719.1**

(22) Date of filing: **04.09.2008**

(54) **Method for drawing geometric shapes**

Verfahren zum Zeichnen von geometrischen Formen

Procédé pour dessiner des formes géométriques

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **05.09.2007 EP 07017373
30.10.2007 EP 07021139**

(43) Date of publication of application:
**11.03.2009 Bulletin 2009/11**

(73) Proprietor: **Vidiom SA
1292 Genève (CH)**

(72) Inventors:
• **Piotrowski, Michael
51-113 Wroclaw (PL)**

• **Hobgarski, Mateusz
58-506 Jelenia Gora (PL)**

(74) Representative: **Pawlowski, Adam et al
EuPatent.PL
Ul. Rentowna 20/26
93-310 Lodz (PL)**

(56) References cited:
**EP-A- 0 715 276**

• **FOLEY J D ET AL: "COMPUTER GRAPHICS
PRINCIPLES AND PRACTICE" COMPUTER
GRAPHICS. PRINCIPLES AND PRACTICE,
READING, ADDISON WESLEY, US, 1 January
1996 (1996-01-01), pages 649-720, XP002082444**

**Description**

Technical concept presented herein relates to graphics processing systems, and more particularly, to graphics processing systems performing rotation of graphical images around X or Y axis and their later displaying including intersection of at least two images.

Rotations of images in three-dimensional space are well known in computer graphics. Nevertheless performance requirements are significant in such cases, therefore three-dimensional graphics is not available or available only to some extent in devices that have limited processing resources. Such devices are personal digital assistants, cellular telephones, receivers and decoders of digital television or the like.

A prior art publication of EP 0715276 (A2), entitled "Method and apparatus for mapping texture", discloses a method executed in a real-time texture mapping system. A more solid and naturally-mapped image is obtained with a minimum of computation volume. The texture-mapping system adds a texture image to an area of a polygon which forms a fundamental unit of three-dimensional image information of an object to be displayed on a screen. A geometry transfer engine (GTE) 61 extracts representing points from the polygonal area. Then, coordinates of the thus extracted representing points are subjected to the perspective transformation. Thereafter, the representing points, after the perspective transformation, are subjected to the linear interpolation in a graphic processing unit (GPU) 62 so that the image is formed.

Hence, there exists a problem of how to decrease performance requirements without compromising user experience while looking at video or graphical data output by the aforementioned devices.

It is therefore an object of the concept presented herein to provide a graphics processing method, for drawing intersected rotated images, that has low computing speed requirements and that will not lead to noticeable quality decrease.

The object of the invention is a computer-implemented method for drawing geometric shapes, the method comprising the steps of obtaining a request to draw at least two geometric shapes, each said geometric shape having assigned a depth coordinate and at least one of said geometric shapes having the depth coordinate variable across its surface, and each geometric shape having the depth coordinate variable being obtained from a rotated source geometric shape having a constant depth,rotated with respect to its initial position around an axis of rotation which is the X axis or the Y axis of a 2D projection plane,; dividing the two dimensional outlines of the geometric shapes into rectangles and assigning to each rectangle a constant depth coordinate; sorting the rectangles according to the depth coordinate value; and drawing the rectangles, in the sorted order, so as to form an output image.

The drawing step may be, for each rectangle, finding a corresponding part of the texture image taking perspective correction into account and copying, with scaling, the corresponding part of the texture image in order to fit it into the rectangle. The sorting may be performed such that the rectangles with the depth coordinate further from the observer are put to the beginning of the sorted queue. The source geometric shape may be rotated around an axis of rotation which is an X axis or a Y axis, and the dividing step may further comprise the steps of defining the two dimensional outline of the rotated source geometric shape by performing its perspective projection onto a two dimensional plane; splitting the two dimensional outline into the rectangles, in places where a pixel of either of the lines, non-parallel to the axis of rotation, of the two dimensional outline changes coordinates, such that in case of a rotation around the Y axis, pixel's Y coordinate value changes by n counted from the Y coordinate value of the previous split point or the start of the line, non-parallel to the axis of rotation, of the two dimensional outline; and in case of a rotation around the X axis, pixel's X coordinate value changes by n counted from the X coordinate value of the previous split point or the start of the line, non-parallel to the axis of rotation, of the two dimensional outline. The lines, non-parallel to the axis of rotation, of the two dimensional outline may be calculated using Bresenham algorithm. The value of the n parameter may be 1 or -1. At least one of the rectangles may have four equal sides. All depth coordinates of the source geometric shape may have equal value.

Another object of the invention is a computer program comprising program code means for performing all the steps of the above-described method when said program is run on a computer, as well as a computer readable medium storing computer-executable instructions performing all the steps of the above-described computer-implemented method when executed on a computer.

Owing to the use of splitting geometric shapes into rectangles and computation of a single depth coordinate for each rectangle, graphical systems performance can be increased due to lower resources allocation for drawing intersected geometric shapes.

This and other objects as well as advantageous features of the invention presented herein are accomplished in accordance with the principles of the presented invention by providing an improved method for drawing intersected rotated images. Further details and features of the system and method, its nature and various advantages will become more apparent from the accompanying drawing and the following detailed description of the preferred embodiments shown in a drawing, in which:

FIG. 1A to 1C show an example of rotation around the X axis;

FIG. 2A to 2C present an example of rotation around the Y axis;

FIG. 3A to 3C depict an example of mapping between a source geometric shape, having a texture mapped thereto, and a two-dimensional outline;

FIG. 4 is a block diagram illustrating steps of rotation method;

FIG. 5 is a block diagram presenting steps of generating intersected geometric shapes;

FIG. 6 is an example of intersected geometric shapes; and

FIG. 7 is an example of creation of intersected geometric shapes.

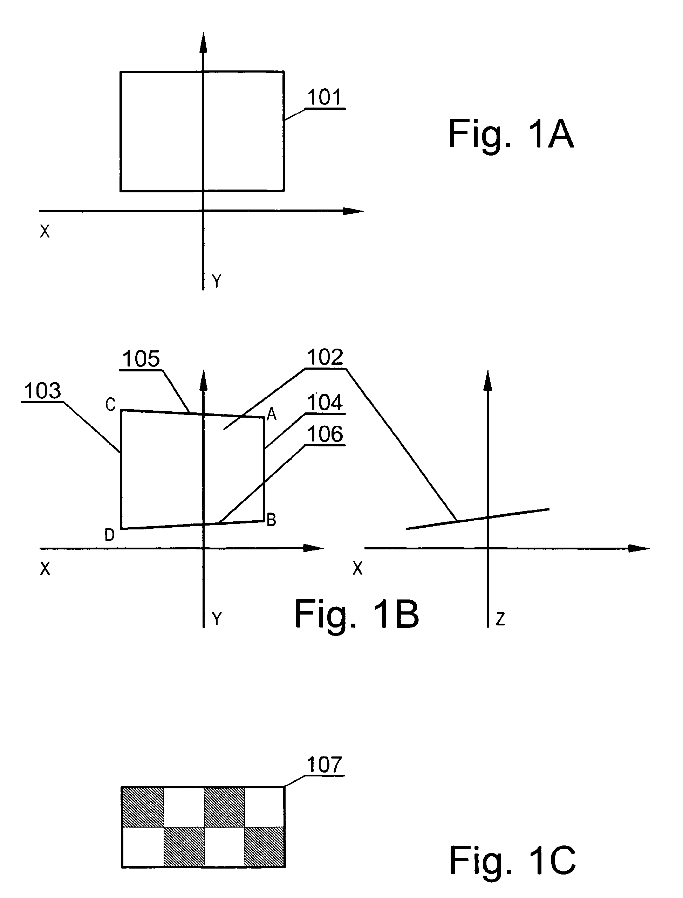

Fig. 1A presents a geometric shape having a form of a square 101 drawn on a two-dimensional X-Y plane. The four corners of the geometric shape have four pairs of corresponding X, Y coordinates. In such alignment the depth coordinate is constant for all pixels of the geometric shape 101.

When there is a need to rotate the geometric shape 101 around to Y axis, the depth coordinate becomes variable as presented in Fig. 1B. The geometric shape 102 is the geometric shape 101 rotated around the Y axis. Due to rotation, the geometric shape 102 is three-dimensional as presented with respect to the depth axis Z. As can be seen, when such rotated geometric shape 102, or its outline, is projected onto a two dimensional X-Y plane its outline consists of two lines 103 and 104 that are parallel to the axis of rotation, which is Y in this example, and two angled lines 105, 106 positioned at an angle to the parallel lines 103, 104. The corners of the geometric shape 102 have been marked A-D respectively.

The geometric shape 101 has an assigned texture, which is shown in Fig. 1C. The texture 107 is to be mapped onto the geometric shape 101 and the geometric shape 102, which is 101 rotated in a three dimensional space.

An exemplary method for performing the projection onto a two dimensional X-Y plane can be a method defined by OpenGL Specification version 1.3, chapter 2.10 - "Coordinate Transformations".

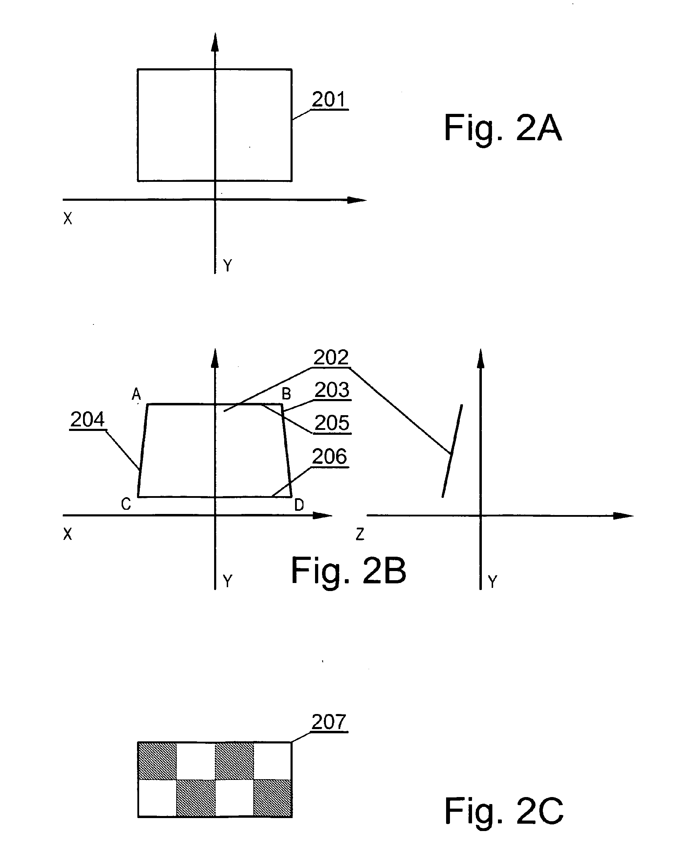

Fig. 2A presents a geometric shape having a form of a square 201 drawn on a two-dimensional X-Y plane. The four corners of the geometric shape have four pairs of corresponding X, Y coordinates. Similarly to Fig. 1A, in such alignment the depth coordinate is constant for all pixels of the image 201.

When there is a need to rotate the geometric shape 201 around the X axis, the depth coordinate becomes variable as presented in Fig. 2B with respect to the Z coordinate. The geometric shape 202 is the geometric shape 201 rotated around the X axis. As can be seen, when such rotated geometric shape 202, or its outline, is projected onto a two dimensional X-Y plane it consists of two lines 205 and 206 that are parallel to the axis of rotation, which is X in this example, and two angled lines 203, 204 positioned at an angle to the parallel lines 205, 206. The corners of the geometric shape 202 have been marked A- D respectively.

The geometric shape 201 has an assigned texture, which is shown in Fig. 2C. The texture 207 is to be mapped onto the geometric shape 201 and the shape 202, which is 201 rotated in a three dimensional space.

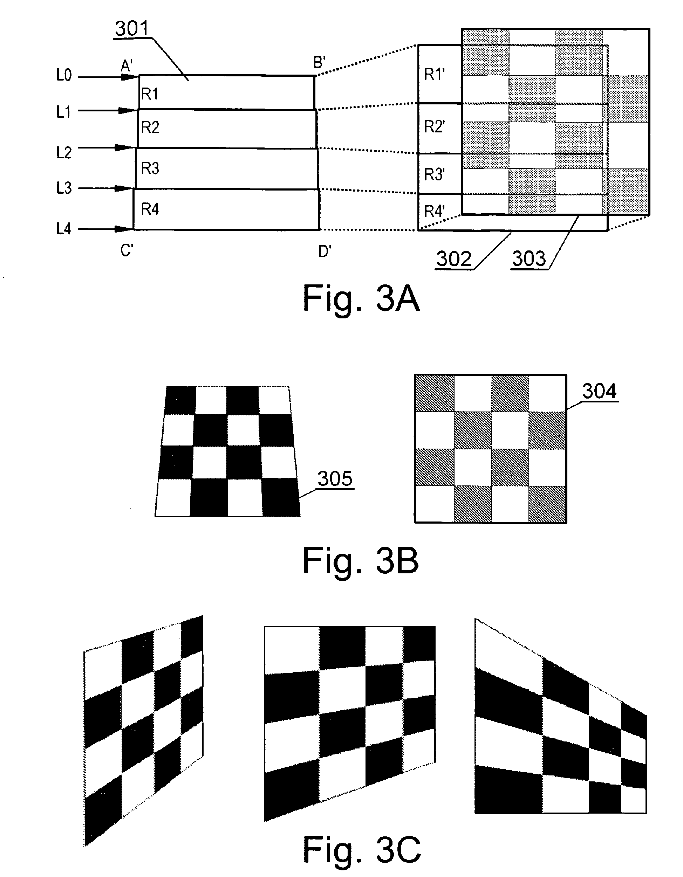

As shown in Fig. 3A the present method uses rectangles for image rendering. The four corners of the geometric shape 302 having an assigned texture 303, are now rotated 202, as shown in Fig. 2B, and are perspective projected onto the 2D screen plane 301, as shown in Fig. 3A. The outline of the destination image will be split into a relatively small number of intermediate rectangles. Nevertheless the small number of the intermediate rectangles shall not be treated as limiting.

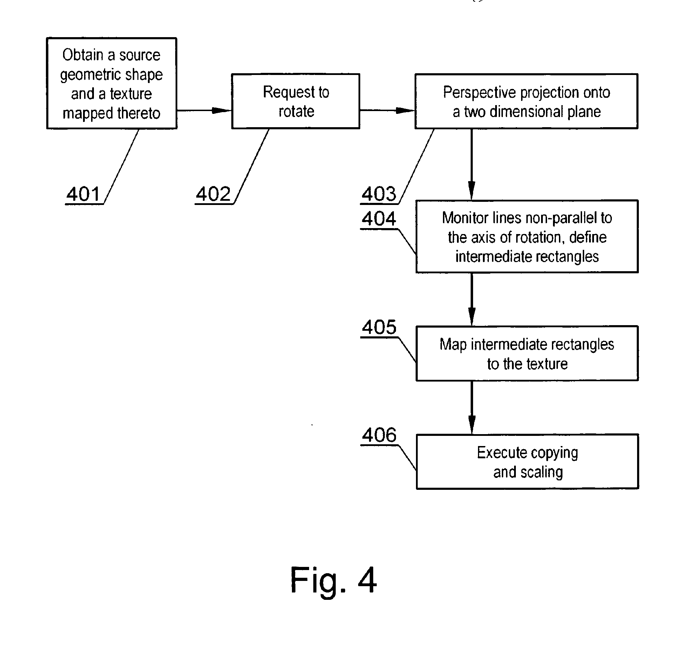

In this example four intermediate rectangles are defined R1-R4 that correspond to R1'-R4' rectangles on the geometric shape 302, which represents geometric shape 201 in this exemplary rotation around Y axis. 303 shows how texture 207 is mapped to the geometric shape 302. Details of the procedure used to extract and process the rectangles have been shown with reference to Fig. 4.

It is to be understood that at least one of the intermediate rectangles may have four equal sides.

After copying rectangles R1'-R4' with scaling so that they fit into intermediate rectangles R1-R4, the geometric shape with a mapped texture 304 of Fig. 3B will typically look as shown 305 in Fig. 3B. In this case more intermediate rectangles have been used.

One skilled in the art will easily recognize that as a result of perspective projection of a geometric shape, the method may obtain different shapes. The obtained shape depends on axis of rotation, angle of rotation and position of the geometric shape, relative to the observer, in the three-dimensional space. Examples of shapes obtained by rotation along the Y axis, with different positions in the three-dimensional space, are depicted in Fig.3C.

The steps of the method according to the present invention have been shown with reference to the Fig. 4. The first step 401 is to obtain a source geometric shape and a texture mapped thereto. The next step 402 is to receive a request to rotate the source geometric shape of step 401.

The source geometric shape 101, 201 or 302 is defined in three-dimensional space by four points, each having corresponding X, Y and Z coordinate. When textures are used, each of the points A, B, C, D is also given a pair of coordinates (u, v) on the texture 107, 207 or 303. The texture is a rectangular image U pixels wide and V pixels high. The (u,v) coordinates define the portion of the texture that is to be mapped onto the rotated source geometric shape.

The next step 403, of the method, is to define a two dimensional outline of a rotated source geometric shape by performing a perspective projection onto a two dimensional plane. A perspective projection of the geometric shape from 3D space to 2D space is executed. Four corners of the rotated geometric shape are defined A', B', C', D' as shown in Fig. 3A.

In this step the system also calculates lines, non-parallel to the axis of rotation, between A' - C' and B' - D' as shown in the example in Fig. 3A, using for example the Bresenham algorithm. It is to be understood that other algorithms may be used for this task.

In step 404, lines, of the two-dimensional outline, non-parallel to the axis of rotation, are checked in terms of their angle and coordinates change. Division positions are set to create a set of intermediate rectangles on the target (rotated) geometric shape. The splitting points are set in places where either A'C' or B'D' line changes its X coordinate by a predetermined number of pixels, as shown in case of Fig. 3A. Those division lines are given labels from L0 to Ln, wherein the value of "n" determines the number of intermediate rectangles. Please note, that lines L0 and Ln are also called division lines for the sake of simplicity in describing the method.

The predetermined number of pixels may be kept low in order to achieve better quality. However the system may set division lines of the intermediate rectangles in places where monitored coordinate changes for example by several pixels. The intermediate rectangles will be larger and fewer copying and scaling operations will be required. Thus, at the cost of quality, performance is gained.

Next, in step 405 of the procedure, a mapping is made in order to find for each intermediate rectangle R1-Rn, of the two dimensional outline, a corresponding rectangle R1'-Rn' on the texture 107, 207 or 303 respectively. In the presented examples n is equal to 4. This may be achieved by a texture mapping with a perspective correction as described in details with reference to the following steps.

The first step is to compute values of 1/z and v/z for points A and C. These are specified as parameters: $A_{1/z}$, $C_{1/z}$, $A_{v/z}$, $C_{v/z}$ respectively. Next, for each Li division line (for i = 0 to n), to linearly interpolate the 1/z parameter (specified as $Li_{1/z}$) and v/z parameter (specified as $Li_{v/z}$) along the AC edge. $Li_{1/z}$ can be calculated based on linear interpolation:

$$Li_{1/z} / (C_{1/z} - A_{1/z}) == (Liy\text{-}A'y) / (C'y\text{-}A'y) => Li_{1/z} == ((Liy\text{-}A'y) / (C'y\text{-}A'y)) * (C_{1/z} - A_{1/z})$$

and $Li_{v/z}$ can be calculated similarly:

$$Li_{v/z} / (C_{v/z} - A_{v/z}) == (Liy\text{-}A'y) / (C'y\text{-}A'y) => Li_{v/z} == ((Liy\text{-}A'y) / (C'y\text{-}A'y)) * (C_{v/z} - A_{v/z})$$

where Liy, A'y, C'y are y coordinates of A', C', Li points. Subsequently these computations are performed in order to get V value:

$$Z = 1 / Li_{1/z}$$

$$Liv = Li_{v/z} * Z$$

Now for Ri' rectangle (for i = 1 to n) the source coordinates for blit operation (copying with scaling) are defined as coordinates on texture:

top left corner:(Au, Li-1v)
bottom right corner: (Bu, Liv)

where Au and Bu are "u" coordinates of A and B points. The target rectangle to blit to (to copy with scaling) is Ri' rectangle itself 406. A specific hardware module, called a blitter, may be used to do this processing. Typically all target rectangles require scaling, it may however happen that only copying will suffice for some of them. For example copying may be enough for the target rectangle closest to the axis of rotation.

Each gain in performance of rotations and drawing of intersected geometric shapes, has a significant impact on overall performance of the graphics systems. Such graphics system may be a two or three dimensional graphics generating and processing system. Recently such systems also include 2.5D graphics systems, where a computer system uses 2D computer graphics to visually simulate 3D computer graphics.

In a 2.5D graphics system, where there is no Z buffer, allowing for image depth management, each rectangle generated by the present method will be assigned a Z coordinate in order to distinguish, the layers generated, in the third dimension. It is however to be understood, that other geometric shapes than a rectangle may be used.

In order to make the rotation, the system receives a source geometric shape, for example a rectangle, and an angle of rotation as a parameter.

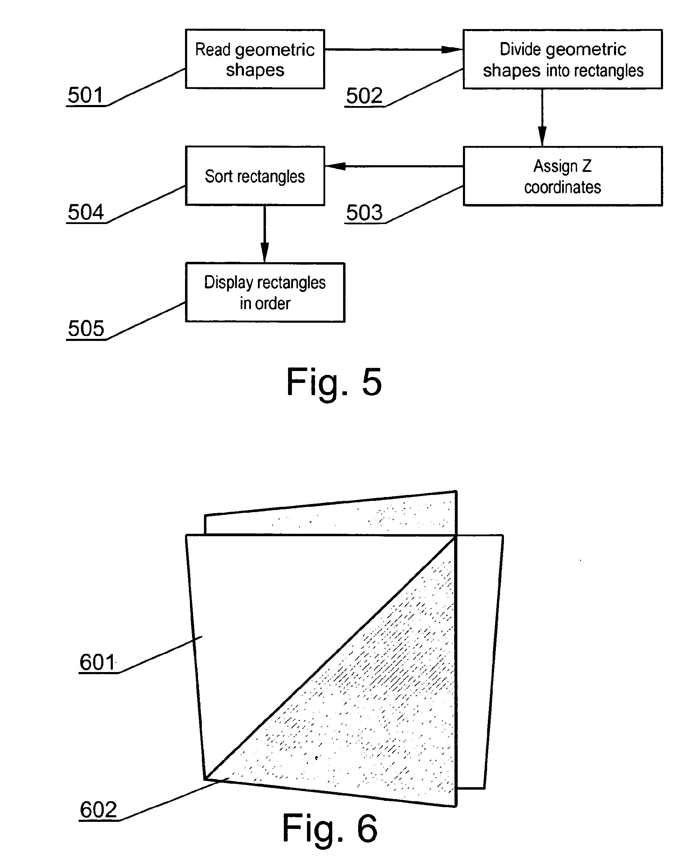

FIG. 5 is a block diagram presenting steps of generating intersected images. The procedure receives, in step 501 of the procedure, several geometric shapes to be displayed as intersected, when at least one of the geometric shapes has a specified rotation angle.

All geometric shapes are then divided, in step 502 of the method, into horizontal (in case of rotation along the "X" axis) or vertical (in case of rotation along the "Y" axis) rectangles, having a constant depth coordinate. This division may be calculated as presented with reference to FIG.1 - FIG. 4.

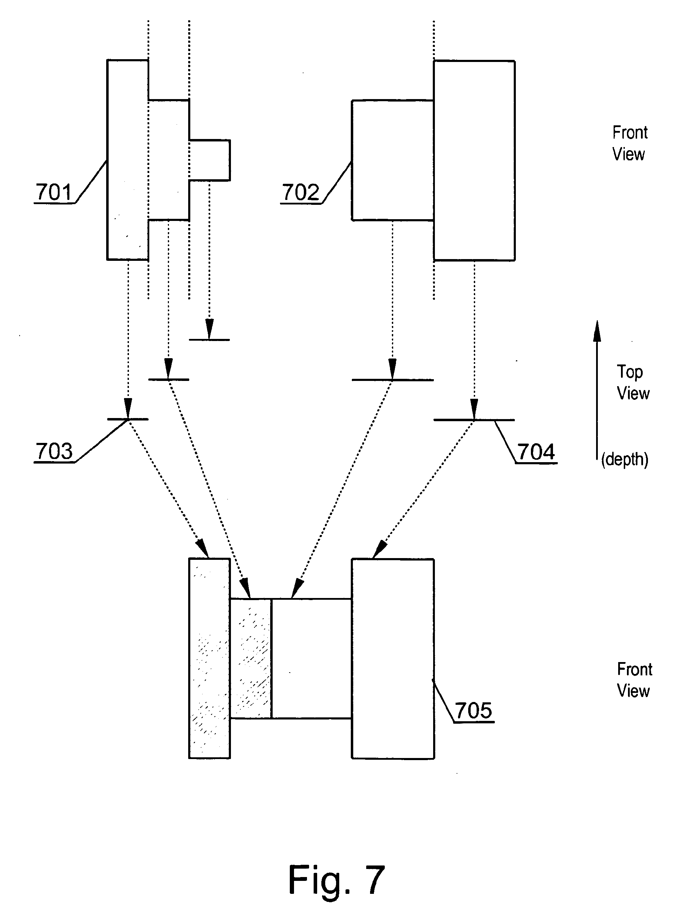

Each rectangle of the target image (textures can be used for geometric shapes) has X (width coordinate), Y (height coordinate) and Z (depth coordinate) values assigned in step 503 of the procedure (described later with reference to FIG. 7). All rectangles (both horizontal and vertical) coming from all geometric shapes are subsequently sorted, in step 504, for example using a queue, by the "Z" coordinate in such a way that the rectangles with the "Z" coordinate further from the observer are put to the beginning of the sorted queue and with "Z" coordinate closest to the observer are put to the end of the sorted queue. Next drawing of geometric shapes starts, in step 505, from the beginning of the sorted queue to the end of the sorted queue. If two or more rotated geometric shapes are intersecting each other, this will also be reflected in an output image.

FIG. 6 is an example of intersected images. In the presented case both images are slightly rotated. The hatched portion is a part of image 602 visible to the observer. The remaining part is obscured by a portion of the image 601.

FIG. 7 depicts an example of creation of intersected geometric shapes. In this example two geometric shapes 701 and 702 are defined. These geometric shapes have already been rotated, by an angle alfa and beta respectively, along the Y axis. Each geometric shape has an initial depth coordinate assigned and when rotated and prepared for splitting into rectangles, the depth coordinate of each rectangle has to be computed.

The depth coordinate of the leftmost rectangle of the geometric shape 701 and rightmost rectangle of the geometric shape 702 does not change after the rotation. Whereas the opposite coordinate changes according to equation:

$$z = -x * \sin(angle) + z * \cos(angle)$$

Having the depth coordinates of the left and rights edges Z(l) and Z(r) and X coordinates of the left and right edge of the geometric shape on the screen plane (i.e after the projection to 2D) defined as X(l) and X(r) the system can compute the remaining parameters.

$$iZl = 1/Zl$$

$$iZr = 1/Zr$$

$$idZ = (iZr - iZl)/(Xr - Xl)$$

$$iZ = iZl$$

For each rectangle:

$$iZ = iZ + n * idZ$$

$$Z = 1 / iZ$$

where n is the width of the rectangle and Z is the depth coordinate of the rectangle.

In case of the geometric shape 701 there are three rectangles 703 and in case of the geometric shape 702 there are two rectangles 704.

After the calculations, when looking at the top view, it is evident when the rotated geometric shapes 701 and 702 are to be drawn in a manner such that they intersect 705, the rectangle of the geometric shape 701, which has the greatest value of the depth coordinate, shall be covered by a part of the geometric shape 702 that is closer to the observer.

Performance tests have shown that the method, according to the present invention, results in improved performance when angles of rotation between 0 degrees and 45 degrees are concerned. Improvement in performance is very significant in the range of 0 degrees to 15 degrees and significant in the range between 15 and 30 degrees. Between 30 and 45 degrees improvement is noticeable. Therefore the lower the angle of rotation the greater gain in performance improvement. Similarly angles in the range between -45 degrees and 0 degrees may be considered in case of counter clockwise rotation.

The method, according to the present invention, gives the best results with geometric shapes such as squares and rectangles but can be applied to images of other shapes, for example a trapezoid or a triangle. These shapes can be polygons or surfaces.

The method described herein is particularly useful when a device, executing the rotation, is equipped with a hardware 2D accelerator capable of copying 2D surface with simultaneous scaling.

It can be easily recognised, by one skilled in the art, that the aforementioned method may be performed by one or more computer programs. Such computer programs are typically executed by utilizing the computing resources in a computing device such as aforementioned personal digital assistants, cellular telephones, receivers and decoders of digital television or the like. Applications are stored in non-volatile memory, for example flash memory or volatile memory, for example RAM and are executed by a processor. These memories are exemplary recording media for storing computer programs comprising computer-executable instructions performing all the steps of the computer-implemented method according the invention presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the invention. The presented preferred embodiments are exemplary only, and are not exhaustive of the scope of the invention presented herein. Accordingly, the scope of protection is not limited to the preferred embodiments described in the specification, but is only limited by the claims that follow.

**Claims**

1. A computer-implemented method for drawing geometric shapes, the method comprising the steps of

   - obtaining a request to draw at least two geometric shapes (701, 702), each said geometric shape (701, 702) having assigned a depth coordinate and at least one of said geometric shapes (701, 702) having the depth coordinate variable across its surface, and each geometric shape (701, 702) having the depth coordinate variable being obtained from a source geometric shape (101, 201, 302) having a constant depth, rotated with respect to its initial position around an axis of rotation which is the X axis or the Y axis of a 2D projection plane;
   - dividing the two dimensional outlines of the geometric shapes into rectangles (703, 704) and assigning to each rectangle (703, 704) a constant depth coordinate;
   - sorting the rectangles (703, 704) according to the depth coordinate value; and
   - drawing the rectangles (703, 704), in the sorted order, so as to form an output image.

2. The method according to claim 1, **characterised in that** the drawing step is, for each rectangle (703, 704), finding a corresponding part of the texture image (207) taking perspective correction into account and copying, with scaling, the corresponding part of the texture image (207) in order to fit it into the rectangle (703, 704).

3. The method according to claim 1 **characterized in that** the sorting is performed such that the rectangles (703, 704) with the depth coordinate further from the observer are put to the beginning of the sorted queue.

4. The method according to claim 1, **characterised in that** the source geometric shape (101, 201, 302) is rotated around an axis of rotation which is an X axis or a Y axis of a 2D projection plane, and the dividing step further comprises the steps of

- defining the two dimensional outline of the rotated source geometric shape (701, 702) by performing its perspective projection onto the 2D projection plane;
- splitting the two dimensional outline into the rectangles (703, 704), in places where a pixel of either of the lines, non-parallel to the axis of rotation, of the two dimensional outline changes coordinates, such that:

- in case of a rotation around the Y axis, pixel's Y coordinate value changes by n counted from the Y coordinate value of the previous split point or the start of the line, non-parallel to the axis of rotation, of the two dimensional outline; and
- in case of a rotation around the X axis, pixel's X coordinate value changes by n counted from the X coordinate value of the previous split point or the start of the line, non-parallel to the axis of rotation, of the two dimensional outline.

5. The method according to claim 4 **characterized in that** the lines, non-parallel to the axis of rotation, of the two dimensional outline are calculated using Bresenham algorithm.

6. The method according to claim 4 **characterized in that** the value of the n parameter is preferably 1 or -1.

7. The method according to claim 4 **characterized in that** at least one of the the rectangles (703, 704) has four equal sides.

8. The method according to claim 4 **characterized in that** all depth coordinates of the source geometric shape have equal value.

9. A computer program comprising program code means for performing all the steps of the method as claimed in any of claims 1 to 8 when said program is run on a computer.

10. A computer readable medium storing computer-executable instructions performing all the steps of the computer-implemented method according to any of claims 1 to 8 when executed on a computer.

**Patentansprüche**

1. Computer-implementiertes Verfahren zum Zeichnen von Geometrieformen, wobei das Verfahren die folgenden Schritte umfasst:

- Erhalten einer Anfrage, wenigstens zwei Geometrieformen (701, 702) zu zeichnen, wobei jede der Geometrieformen (701, 702) eine zugeordnete Tiefenkoordinate aufweist und wenigstens eine der Geometrieformen (701, 702) die Tiefenkoordinate variable über ihrer Oberfläche aufweist, und wobei jede Geometrieform (701, 702) die Tiefenkoordinate variable aufweist, die von einer Quellgeometrieform (101, 201, 302) mit einer konstanten Tiefe erhalten ist, welche bezüglich ihrer Anfangsposition um eine Drehachse gedreht wird, welche die X-Achse oder die Y-Achse einer 2D-Projektionsebene ist;
- Teilen der zweidimensionalen Umrisse der Geometrieformen in Rechtecke (703, 704) und Zuordnen einer konstanten Tiefenkoordinate zu jedem Rechteck (703, 704);
- Sortieren der Rechtecke (703, 704) nach dem Tiefenkoordinatenwert; und
- Zeichnen der Rechtecke (703, 704) in der sortierten Reihenfolge, um so ein Ausgabebild zu bilden.

2. Verfahren nach Anspruch 1, **dadurch gekennzeichnet, dass** der Zeichnenschritt ein Finden eines entsprechenden Teils des Texturbildes (207) für jedes Rechteck (703, 704) ist, unter Berücksichtigung einer perspektivischen Korrektur, und ein Kopieren, mit Skalierung, des entsprechenden Teils des Texturbildes (207), um es in das Rechteck (703, 704) einzupassen.

3. Verfahren nach Anspruch 1, **dadurch gekennzeichnet, dass** das Sortieren derart durchgeführt wird, dass die Rechtecke (703, 704) mit der weiter von dem Betrachter entfernten Tiefenkoordinate an den Anfang der sortierten Reihe gesetzt werden.

4. Verfahren nach Anspruch 1, **dadurch gekennzeichnet, dass** die Quellgeometrieform (101, 201, 302) um eine Drehachse gedreht wird, die eine X-Achse oder eine Y-Achse einer 2D-Projektionsebene ist, und dass der Teilungsschritt ferner die folgenden Schritte umfasst:

   - Definieren des zweidimensionalen Umrisses der gedrehten Quellgeometrieform (701, 702) vermittels Durchführen seiner perspektivischen Projektion auf die 2D-Projektionsebene;
   - Teilen des zweidimensionalen Umrisses in die Rechtecke (703, 704) an Stellen, wo ein Pixel von einer von den nicht zu der Drehachse parallelen Linien des zweidimensionalen Umrisses die Koordinaten ändert, so dass:

      - im Fall einer Drehung um die Y-Achse, sich der Y-Koordinatenwert des Pixels um n ändert, gezählt von dem Y-Koordinatenwert des vorherigen Teilungspunktes oder des Beginns der nicht zu der Drehachse parallelen Linie des zweidimensionalen Umrisses; und
      - im Fall einer Drehung um die X-Achse, sich der X-Koordinatenwert des Pixels um n ändert, gezählt von dem X-Koordinatenwert des vorherigen Teilungspunktes oder des Beginns der nicht zu der Drehachse parallelen Linie des zweidimensionalen Umrisses.

5. Verfahren nach Anspruch 4, **dadurch gekennzeichnet, dass** die nicht zu der Drehachse parallelen Linien des zweidimensionalen Umrisses unter Verwendung des Bresenham-Algorithmus berechnet werden.

6. Verfahren nach Anspruch 4, **dadurch gekennzeichnet, dass** der Wert des n-Parameters vorzugsweise 1 oder -1 ist.

7. Verfahren nach Anspruch 4, **dadurch gekennzeichnet, dass** wenigstens eines der Rechtecke (703, 704) vier gleiche Seiten aufweist.

8. Verfahren nach Anspruch 4, **dadurch gekennzeichnet, dass** alle Tiefenkoordinaten der Quellgeometrieform einen gleichen Wert aufweisen.

9. Computerprogramm, umfassen Programmcodemittel zum Durchführen aller Verfahrensschritte, wie in den Ansprüchen 1 bis 8 beansprucht, wenn das Programm auf einem Computer läuft.

10. Computer-lesbares Medium, welches Computer-ausführbare Befehle speichert, die alle Schritte des Computer-implementierten Verfahrens nach einem der Ansprüche 1 bis 8 ausführen, wenn sie auf einem Computer ausgeführt werden.

**Revendications**

1. Procédé mis en oeuvre par ordinateur pour dessiner des formes géométriques, le procédé comprenant les étapes prévoyant de :

   - obtenir une demande pour dessiner au moins deux formes géométriques (701, 702), chaque dite forme géométrique (701, 702) ayant assignée une coordonnée de profondeur et au moins une desdites formes géométriques (701, 702) ayant la coordonnée de profondeur variable à travers sa surface, et chaque forme géométrique (701, 702) ayant la coordonnée de profondeur variable étant obtenue à partir d'une forme géométrique source (101, 201, 302) ayant une profondeur constante, tournée par rapport à sa position initiale autour d'un axe de rotation qui est l'axe X ou l'axe Y d'une plan de projection en 2D;
   - diviser les contours bidimensionnels des formes géométriques en rectangles (703, 704) et assigner à chaque rectangle (703, 704) une coordonnée de profondeur constante ;
   - trier les rectangles (703, 704) selon la valeur de coordonnée de profondeur ; et
   - dessiner les rectangles (703, 704), dans l'ordre trié, afin de former une image de sortie.

2. Procédé selon la revendication 1, **caractérisé en ce que** l'étape de dessin est, pour chaque rectangle (703, 704), de trouver une partie correspondante de l'image de texture (207) en prenant en compte la correction de perspective et de copier, avec une mise à l'échelle, la partie correspondante de l'image de texture (207) afin de la faire entrer dans le rectangle (703, 704).

3. Procédé selon la revendication 1, **caractérisé en ce que** le tri est effectué de sorte que les rectangles (703, 704) avec la coordonnée de profondeur plus éloignée de l'observateur soient placés au début de la file d'attente triée.

**4.** Procédé selon la revendication 1, **caractérisé en ce que** la forme géométrique source (101, 201, 302) est tournée autour d'un axe de rotation qui est un axe X ou un axe Y d'un plan de projection en 2D, et l'étape de division comprend en outre les étapes prévoyant de :

- définir le contour bidimensionnel de la forme géométrique source tournée (701, 702) en effectuant sa projection en perspective sur le plan de projection en 2D ;
- découper le contour bidimensionnel en rectangles (703, 704), aux endroits où un pixel de l'une ou l'autre des lignes, non parallèles à l'axe de rotation, du contour bidimensionnel change de coordonnées, de sorte que :

- dans le cas d'une rotation autour de l'axe Y, la valeur de coordonnée Y du pixel change de n compté à partir de la valeur de coordonnée Y du point de découpe précédent ou du début de la ligne, non parallèle à l'axe de rotation, du contour bidimensionnel ; et
- dans le cas d'une rotation autour de l'axe X, la valeur de coordonnée X du pixel change de n compté à partir de la valeur de coordonnée X du point de découpe précédent ou du début de la ligne, non parallèle à l'axe de rotation, du contour bidimensionnel.

**5.** Procédé selon la revendication 4, **caractérisé en ce que** les lignes, non parallèles à l'axe de rotation, du contour bidimensionnel sont calculées en utilisant l'algorithme de Bresenham.

**6.** Procédé selon la revendication 4, **caractérisé en ce que** la valeur du paramètre n est de préférence 1 ou -1.

**7.** Procédé selon la revendication 4, **caractérisé en ce qu'**au moins un des rectangles (703, 704) a quatre côtés égaux.

**8.** Procédé selon la revendication 4, **caractérisé en ce que** toutes les coordonnées de profondeur de la forme géométrique source ont une valeur égale.

**9.** Programme informatique comprenant des moyens de code de programme pour effectuer toutes les étapes du procédé tel que revendiqué dans l'une quelconque des revendications 1 à 8 lorsque ledit programme est exécuté sur un ordinateur.

**10.** Support lisible par ordinateur stockant des instructions exécutables par ordinateur effectuant toutes les étapes du procédé mis en oeuvre par ordinateur selon l'une quelconque des revendications 1 à 8 lorsqu'exécutées sur un ordinateur.

Fig. 1A

Fig. 1B

Fig. 1C

Fig. 2A

Fig. 2B

Fig. 2C

Fig. 3A

Fig. 3B

Fig. 3C

Obtain a source
geometric shape
and a texture
mapped thereto

Request to
rotate

Perspective projection onto
a two dimensional plane

401

402

403

404

Monitor lines non-parallel to
the axis of rotation, define
intermediate rectangles

405

Map intermediate rectangles
to the texture

406

Execute copying
and scaling

# Fig. 4

```
┌──────────────────┐          ┌──────────────────────┐
│ Read geometric   │─────────>│ Divide geometric     │
│ shapes           │          │ shapes into rectangles│
└──────────────────┘          └──────────────────────┘
  501                   502              │
                                         │
                                         ▼
┌──────────────────┐          ┌──────────────────────┐
│ Sort rectangles  │<─────────│ Assign Z             │
│                  │          │ coordinates          │
└──────────────────┘          └──────────────────────┘
  504          │        503
               │
               ▼
┌──────────────────┐
│ Display rectangles│
│ in order         │
└──────────────────┘
  505
```

## Fig. 5

601

602

## Fig. 6

701

702

Front
View

703

Top
View

704

(depth)

705

Front
View

# Fig. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0715276 A